# EUROPÄISCHE PATENTANMELDUNG

(11) **EP 3 751 421 A1**
(43) Veröffentlichungstag der Anmeldung: **16.12.2020**
(21) Anmeldenummer: 19180018.4
(22) Anmeldetag: 13.06.2019
(51) Int. Cl.: G06F 11/30, G06F 9/455, H04L 29/08, G06F 11/07, G06F 11/14, G05B 19/418, H04L 29/12

(54) **VERFAHREN ZUR BEREITSTELLUNG VON STEUERUNGSANWENDUNGEN UND KONFIGURATIONSSTEUERUNGSEINRICHTUNG**

(71) Anmelder: Siemens Aktiengesellschaft, 80333 München (DE)
(72) Erfinder: Albrecht, Harald, 90475 Nürnberg (DE); Jung, Konstantin, 90537 Feucht (DE)

(57) **Zusammenfassung**

Die Erfindung betrifft eine Bereitstellung von Steuerungsanwendungen und eine Konfigurationssteuerungseinrichtung, die Kommunikationsnetzadressen von Ablaufsteuerungskomponenten, die Steuerungsanwendungen bereitstellen, sowie Identifikatoren der Ablaufsteuerungskomponenten oder von Server-Einrichtungen, auf denen die Ablaufsteuerungskomponenten ausgeführt werden, von einer Überwachungseinrichtung abfragt. Aus den abgefragten Kommunikationsnetzadressen und Identifikatoren sowie aus Bezeichnungen der Steuerungsanwendungen erzeugt die Konfigurationssteuerungseinrichtung Konfigurationsinformationen für eine Weiterleitungseinrichtung. Die Weiterleitungseinrichtung nimmt Anfragen von Endgeräten zur Nutzung der Steuerungsanwendungen entgegen und leitet diese entsprechend den Konfigurationsinformationen an eine jeweilige Ablaufsteuerungskomponente weiter.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Entsprechend EP 3 242 466 B1 speichert eine Konfigurationsdatenverteilereinheit bei Empfang einer Adresskonfigurationsanforderung eines ersten Kommunikationsgeräts industriellen Automatisierungssystems eine Zuordnung mit vorgebbarer Gültigkeitsdauer zwischen dem ersten Kommunikationsgerät und einem Adresskonfigurationsserver und leitet anhand der gespeicherten Zuordnung während der Gültigkeitsdauer sämtliche Konfigurationsanforderungen des ersten Kommunikationsgeräts an den Adresskonfigurationsserver weiter. Dagegen speichert die Konfigurationsdatenverteilereinheit bei Empfang einer Präfixdelegationsanforderung eines zweiten Kommunikationsgeräts mit Routerfunktion eine Zuordnung mit vorgebbarer Gültigkeitsdauer zwischen dem zweiten Kommunikationsgerät und eine Präfixkonfigurationsserver und leitet anhand der gespeicherten Zuordnung während der Gültigkeitsdauer sämtliche Konfigurationsanforderungen des zweiten Kommunikationsgeräts an den Präfixkonfigurationsserver weiter.

In der älteren europäischen Patentanmeldung mit dem Anmeldeaktenzeichen 19166203.0 ist ein Verfahren zur automatischen Konfiguration eines Automatisierungsgeräts beschrieben, bei dem eine Geräte-Management-Einheit überwacht, ob dem Automatisierungsgerät ein Automatisierungssystem-Kenner zugeordnet wird. Wenn die Geräte-Management-Einheit eine solche Zuordnung erkannt hat, fragt sie bei einer zentralen Management-Einheit eines Clusters an, ob in einer Cluster-Zustands-Datenbank mit Beschreibungsobjekten für zumindest einen Knoten des Clusters bereits ein Beschreibungsobjekt existiert, in dem der dem Automatisierungsgerät zugeordnete Automatisierungssystem-Kenner hinterlegt ist. Falls ein solches Beschreibungsobjekt nicht existiert, oder falls ein solches Beschreibungsobjekt existiert, dieses jedoch als inaktiv deklariert ist, erzeugt die Geräte-Management-Einheit in der Cluster-Zustands-Datenbank für einen dem Automatisierungsgerät zugeordneten Knoten-Kenner ein Beschreibungsobjekt, in dem der dem Automatisierungsgerät zugeordnete Automatisierungs-Kenner hinterlegt ist.

Aus der älteren europäischen Patentanmeldung mit dem Anmeldeaktenzeichen 18191982.0 ist bekannt, dass zur Simulation einer Verarbeitung von Reservierungsanfragen für Multicast-Datenströme in Kommunikationsnetzen hinsichtlich ihres Verhaltens zu simulierende Kommunikationsgeräte jeweils funktional in eine als Control Plane bezeichnete Kommunikationssteuerungsebene sowie in eine als Data Plane bezeichnete Datenübermittlungsebene unterteilt werden. Für der Control Plane zugeordnete Funktionen der Kommunikationsgeräte jeweils Simulationssystem-Komponenten bereitgestellt werden, die durch in einer Ablaufsteuerungsumgebung ausführbare Software-Container gebildet werden. Netzinfrastrukturgeräte werden auf der Data Plane durch mittels der Netzinfrastrukturgeräte jeweils bereitgestellte Ressourcen modelliert. Die den Kommunikationsgeräten zugeordneten Software-Container werden entsprechend einer vorgegebenen Topologie selektiv in der Ablaufsteuerungsumgebung ausgeführt und dort miteinander gekoppelt.

Für Rechenzentren werden Cluster-Orchestrierungssysteme dazu verwendet, um Dienste bzw. Anwendungen bereitstellende Software-Container automatisiert und auslastungsabhängig auf aktuell verfügbare Server oder virtuelle Maschinen eines Rechner-Clusters zu verteilen. In industriellen Automatisierungssystemen beispielsweise kann es Anwendungsfälle geben, in denen es nicht egal ist, durch welchen Server ein Dienst bzw. eine Anwendung bereitgestellt wird. Dies gilt insbesondere dann, wenn ein Server oder eine virtuelle Maschine an eine bestimmte zu steuernde Maschine oder Automatisierungskomponente angebunden ist, in der mittels des Dienstes bzw. der Anwendung eine ausgewählte Aktion ausgelöst wird. Trotz identischer oder vergleichbarer Code-Basis sind mehrere gleichartige Software-Container unter diesen Rahmenbedingungen nicht untereinander austauschbar, da die bereitgestellten Dienste bzw. Anwendungen vorgegebenen Maschinen oder Automatisierungskomponenten konkret zugeordnet sind. Ein Beispiel für einen solchen Anwendungsfall ist ein gezielter Download eines Roboter-Steuerungsprogramms in eine speicherprogrammierbare Steuerung eines ausgewählten Roboters in einer bestimmten Fertigungszelle.

Grundsätzlich ist durch in bestehenden Cluster-Orchestrierungssystemen realisierte Kennzeichnungskonzepte, beispielsweise Label oder Annotationen, bereits eine Zuordnung von Software-Containern zu Server-Instanzen möglich. Jedoch müssen entsprechende Zuordnungen statisch konfiguriert werden, damit die Zuordnungen nicht durch ansonsten wirksame Lastverteilungsmechanismen innerhalb eines Rechner-Clusters außer Kraft gesetzt werden.

Der vorliegenden Erfindung liegt die Aufgabe zugrunde, ein Verfahren zur Bereitstellung von Steuerungsanwendungen, die durch Server-Einrichtungen mittels Ablaufsteuerungskomponenten bereitgestellt werden, zu schaffen, das eine gezielte, aufwandsarm zu konfigurierende Zuordnung von Ablaufsteuerungskomponenten zu Server-Einrichtungen ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch eine Konfigurationssteuerungseinrichtung mit den in Anspruch 14 angegebenen Merkmalen gelöst. Vorteilhafte Weiterbildungen sind in den abhängigen Ansprüchen angegeben.

Entsprechend dem erfindungsgemäßen Verfahren werden Steuerungsanwendungen durch Server-Einrichtungen zur Nutzung an Endgeräten über ein Kommunikationsnetz für eine Übermittlung zeitkritischer Daten bereitgestellt. Server-Einrichtungen sind insbesondere sowohl Server als auch virtuelle Maschinen. Vorzugsweise ist das Kommunikationsnetz als Time-Sensitive Network ausgestaltet, beispielsweise entsprechend IEEE 802.1Q, IEEE 802.1AB, IEEE 802.1AS, IEEE 802.1BA bzw. IEEE 802.1CB. Mittels der Steuerungsanwendungen werden beispielsweise Dienste bzw. Funktionen eines industriellen Automatisierungssystems bereitgestellt. Dabei können die Dienste jeweils mehrere gleichartige oder identische Steuerungsanwendungen umfassen, die jeweils durch unterschiedliche Server-Einrichtungen bereitgestellt werden.

Die Steuerungsanwendungen werden erfindungsgemäß jeweils mittels Ablaufsteuerungskomponenten bereitgestellt, die in mittels der Server-Einrichtungen gebildete Ablaufsteuerungsumgebungen ladbar und dort ausführbar sind. Dabei sind die Ablaufsteuerungskomponenten auf jeweils andere Server-Einrichtungen zur dortigen Ausführung migrierbar bzw. auf jeweils anderen Server-Einrichtungen zeitgleich ausführbar. Darüber hinaus erfasst eine mehreren Server-Einrichtungen zugeordnete Überwachungseinrichtung ein Anlegen, ein Löschen bzw. eine Änderung der Ablaufsteuerungskomponenten und registriert die Steuerungsanwendungen mit ihrem jeweiligen Ausführungsstatus.

Die Ablaufsteuerungskomponenten sind vorzugsweise Software-Container, die jeweils innerhalb einer von anderen Software-Containern isolierten Ablaufsteuerungsumgebung auf einem Host-Betriebssystem der jeweiligen Server-Einrichtung ablaufen. Insbesondere nutzen die Software-Container jeweils gemeinsam mit anderen auf der jeweiligen Server-Einrichtung ablaufenden Software-Containern einen Kernel des Host-Betriebssystems der jeweiligen Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Erfindungsgemäß fragt eine Konfigurationssteuerungseinrichtung von der Überwachungseinrichtung Kommunikationsnetzadressen der Ablaufsteuerungskomponenten sowie Identifikatoren der Ablaufsteuerungskomponenten oder der Server-Einrichtungen, auf denen die Ablaufsteuerungskomponenten ausgeführt werden, ab und ordnet diese Informationen den Steuerungsanwendungen zu. Die Konfigurationssteuerungseinrichtung erzeugt aus den abgefragten Kommunikationsnetzadressen und Identifikatoren sowie aus Bezeichnungen der zugeordneten Steuerungsanwendungen Konfigurationsinformationen für eine Weiterleitungseinrichtung. Die Weiterleitungseinrichtung nimmt Anfragen der Endgeräte zur Nutzung der Steuerungsanwendungen entgegen und leitet diese entsprechend den Konfigurationsinformationen an eine jeweilige Ablaufsteuerungskomponente weiter. Dabei umfassen die Anfragen jeweils zumindest eine Bezeichnung einer ausgewählten Steuerungsanwendung und einen Identifikator einer ausgewählten Ablaufsteuerungskomponente oder Server-Einrichtung.

Das erfindungsgemäße Verfahren ermöglicht eine aufwandsarme Konfiguration eines Rechner-Clusters und zugeordneter Infrastruktureinrichtungen für eine Bereitstellung von Steuerungsanwendungen. Insbesondere wird die Konfiguration bei einem Hinzufügen oder Entfernen von die Steuerungsanwendungen bereitstellenden Ablaufsteuerungskomponenten automatisch angepasst.

Entsprechend einer bevorzugten Ausgestaltung der vorliegenden Erfindung ist die Weiterleitungseinrichtung ein Reverse-Proxy, beispielsweise ein HTTP-Reverse-Proxy bzw. -Gateway entsprechend IETF RFC 7230, und ersetzt von den Anfragen der Endgeräte jeweils umfasste Referenzen auf angeforderte Dienste entsprechend den Konfigurationsinformationen durch geänderte Referenzen auf die angeforderten Dienste. Insbesondere leitet die Weiterleitungseinrichtung die Anfragen der Endgeräte jeweils entsprechend den geänderten Referenzen an die jeweilige Ablaufsteuerungskomponente weiter. Entsprechend einer weiteren Ausgestaltung umfassen die Konfigurationsinformationen Routen von der Weiterleitungseinrichtung zur jeweiligen Ablaufsteuerungskomponente. Dabei sind die Referenzen auf die angeforderten Dienste Uniform Resource Locators (URL). Vorteilhafterweise werden nur Routen zu den Ablaufsteuerungskomponenten eingerichtet werden, die nutzbaren bzw. freigegebenen Diensten zugeordnet sind. Auf diese Weise kann vermieden werden, dass sich Steuerungsanwendungen nutzende Endgeräte mit Ablaufsteuerungskomponenten oder Server-Einrichtungen verbinden, die für eine Nutzung der jeweiligen Steuerungsanwendung nicht vorgesehen sind.

Das Anlegen, das Löschen bzw. die Änderung der Ablaufsteuerungskomponenten umfasst vorteilhafterweise jeweils ein Allokieren oder Freigeben von Ressourcen in der jeweiligen Server-Einrichtung. Vorzugsweise erfasst die Überwachungseinrichtung das Anlegen, das Löschen bzw. die Änderung der Ablaufsteuerungskomponenten auf Anforderung durch die die Konfigurationssteuerungseinrichtung und registriert die Steuerungsanwendungen mit ihrem jeweiligen Ausführungsstatus. Die Identifikatoren der Ablaufsteuerungskomponenten oder der Server-Einrichtungen, auf denen die Ablaufsteuerungskomponenten ausgeführt werden, sind beispielsweise durch die Überwachungseinrichtung verwaltete Bezeichner für die Ablaufsteuerungskomponenten oder Stations- oder Funktionsnamen der Server-Einrichtungen. Insbesondere können die Identifikatoren auch in einem Cluster-Orchestrierungssystem verwendete Label für Dienste, Software-Container, Pods oder Daemon Sets sein.

Die erfindungsgemäße Konfigurationssteuerungseinrichtung ist zur Durchführung eines Verfahrens entsprechend vorangehenden Ausführungen vorgesehen und dazu ausgestaltet und eingerichtet, Kommunikationsnetzadressen von Ablaufsteuerungskomponenten, die Steuerungsanwendungen bereitstellen und in mittels Server-Einrichtungen gebildete Ablaufsteuerungsumgebungen ladbar und dort ausführbar sind, sowie Identifikatoren der Ablaufsteuerungskomponenten oder der Server-Einrichtungen, auf denen die Ablaufsteuerungskomponenten ausgeführt werden, von einer den Server-Einrichtungen zugeordneten Überwachungseinrichtung abzufragen und diese Informationen den Steuerungsanwendungen zuzuordnen. Darüber hinaus ist die Konfigurationssteuerungseinrichtung dazu ausgestaltet und eingerichtet, aus den abgefragten Kommunikationsnetzadressen und Identifikatoren sowie aus Bezeichnungen der zugeordneten Steuerungsanwendungen Konfigurationsinformationen für eine Weiterleitungseinrichtung zu erzeugen und an die Weiterleitungseinrichtung bereitzustellen. Dabei nimmt die Weiterleitungseinrichtung Anfragen von Endgeräten zur Nutzung der Steuerungsanwendungen entgegen und leitet diese entsprechend den Konfigurationsinformationen an eine jeweilige Ablaufsteuerungskomponente weiter.

Die vorliegende Erfindung wird nachfolgend an einem Ausführungsbeispiel anhand der Zeichnung näher erläutert. Es zeigt
- Figur 1: eine schematische Darstellung einer Anordnung mit einem Rechner-Cluster zur Bereitstellung von Steuerungsanwendungen über ein Kommunikationsnetz an zumindest ein Endgerät,
- Figur 2: eine Darstellung einer Modifikation einer Anfrage zur Nutzung einer Steuerungsanwendung bei einer Weiterleitung durch einen Reverse-Proxy des Rechner-Clusters.

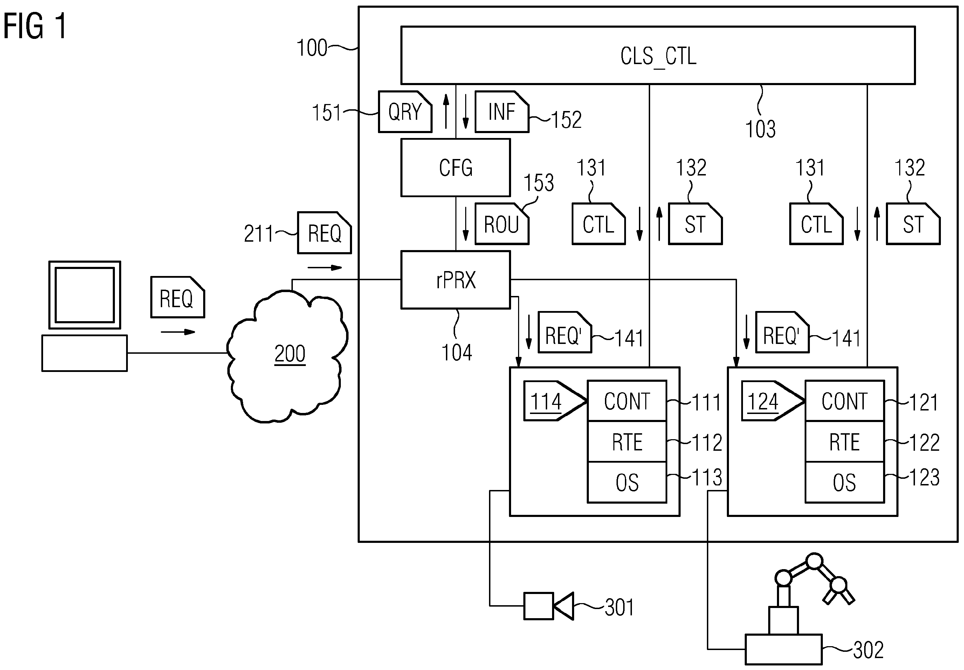

Die in Figur 1 dargestellte Anordnung umfasst ein Rechner-Cluster 100 mit mehreren Server-Einrichtungen 101-102 zur Bereitstellung von Steuerungsanwendungen, einer den Server-Einrichtungen 101-102 zugeordneten Überwachungseinrichtung 103 und einem Reverse-Proxy 104 zur Entgegennahme von Anfragen 211 zur Nutzung der Steuerungsanwendungen. Mittels der Steuerungsanwendungen werden beispielsweise Dienste bzw. Funktionen eines industriellen Automatisierungssystems bereitgestellt. Vorzugsweise umfassen die Dienste Schnittstellendefinitionen, die für einen dauerhaften Zugriff auf die Dienste genutzt werden können. Darüber hinaus können die Dienste jeweils mehrere gleichartige oder identische Steuerungsanwendungen umfassen, die jeweils durch unterschiedliche Server-Einrichtungen bereitgestellt werden. Eine Bereitstellung mehrerer gleichartiger Steuerungsanwendungen auf unterschiedlichen Server-Einrichtungen gleichzeitig kann beispielsweise mittels Kubernetes-Daemon Sets durch die Überwachungseinrichtung 103 gesteuert werden.

Außerdem umfasst die in Figur 1 dargestellte Anordnung zumindest ein die bereitgestellten Steuerungsanwendungen nutzendes Endgerät 201, das über ein Kommunikationsnetz 200 für eine Übermittlung zeitkritischer Daten mit dem Rechner-Cluster 100 verbunden ist und die Anfragen 211 zur Nutzung der Steuerungsanwendungen zunächst an den Reverse-Proxy 104 sendet. Das Kommunikationsnetz ist vorzugsweise als Time-Sensitive Network ausgestaltet, insbesondere entsprechend IEEE 802.1Q, IEEE 802.1AB, IEEE 802.1AS, IEEE 802.1BA bzw. IEEE 802.1CB.

Die Server-Einrichtungen 101-102 können als Server oder virtuelle Maschinen ausgestaltet sein und beispielsweise Steuerungsgeräte eines industriellen Automatisierungssystems, insbesondere speicherprogrammierbare Steuerungen, oder Feldgeräte, beispielsweise Sensoren oder Aktoren, implementieren. Im vorliegenden Ausführungsbeispiel dienen die Server-Einrichtungen 101-102 einem Austausch von Steuerungs- und Messgrößen mit durch die Server-Einrichtungen 101-102 gesteuerten Maschinen oder Vorrichtungen 301-302. Insbesondere sind die Server-Einrichtungen 101 für eine Ermittlung geeigneter Steuerungsgrößen aus erfassten Messgrößen vorgesehen.

Das Endgerät 201 ist im vorliegenden Ausführungsbeispiel eine Bedien- und Beobachtungsstation und dient zur Visualisierung von Prozessdaten bzw. Mess- und Steuerungsgrößen, die durch die Server-Einrichtungen 101-102 oder andere Automatisierungsgeräte verarbeitet bzw. erfasst werden. Insbesondere wird das Endgerät 201 zur Anzeige von Werten eines Regelungskreises und zur Veränderung von Regelungsparametern oder - programmen verwendet.

Die Steuerungsanwendungen werden jeweils mittels Software-Containern 111, 121 bereitgestellt, die Ablaufsteuerungskomponenten bilden und in auf den Server-Einrichtungen 101-102 installierte Ablaufsteuerungsumgebungen 112, 122 ladbar und dort ausführbar sind. Die Software-Container 111, 121 können grundsätzlich auf jeweils andere Server-Einrichtungen zur dortigen Ausführung migriert werden oder auf mehreren Server-Einrichtungen zeitgleich ausgeführt werden. Insbesondere laufen die Software-Container 111, 121 jeweils innerhalb einer von anderen Software-Containern isolierten Ablaufsteuerungsumgebung 112, 122 auf einem Host-Betriebssystem 113, 123 der jeweiligen Server-Einrichtung 101-102 ab. Dabei nutzen die Software-Container 111, 121 jeweils gemeinsam mit anderen auf der jeweiligen Server-Einrichtung 101-102 ablaufenden Software-Containern einen Kernel des Host-Betriebssystems 113, 123 der jeweiligen Server-Einrichtung 101-102.

Eine Isolation der Ablaufsteuerungsumgebungen 112, 122 bzw. eine Isolation von ausgewählten Betriebssystemmitteln untereinander wird insbesondere mittels Control Groups und Namespacing realisiert. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für die Software-Container 111, 121 können beispielsweise aus einem durch eine Vielzahl von Nutzern lesend bzw. schreibend zugreifbaren Speicher- und Bereitstellungssystem abgerufen werden.

Die den Server-Einrichtungen 101-102 innerhalb des Rechner-Clusters 100 zugeordnete Überwachungseinrichtung 103 erfasst mittels entsprechender Überwachungsaufträge 131 ein Anlegen, ein Löschen bzw. eine Änderung der Software-Container 111, 121 bzw. von die Software-Container 111, 121 umfassenden Kubernetes-Pods und registriert die zugeordneten Steuerungsanwendungen mit ihrem jeweils zurückgemeldeten Ausführungsstatus 132. Vorzugsweise ist die Überwachungseinrichtung 103 als Kubernetes-API-Server ausgestaltet. Im vorliegenden Ausführungsbeispiel umfasst das Anlegen, das Löschen bzw. die Änderung der Ablaufsteuerungskomponenten insbesondere jeweils ein Allokieren oder Freigeben von Ressourcen in der jeweiligen Server-Einrichtung.

Zusätzlich umfasst das Rechner-Cluster 100 eine Konfigurationssteuerungseinrichtung 105 für den Reverse-Proxy 104. Die Konfigurationssteuerungseinrichtung 105 fragt von der Überwachungseinrichtung 103 mittels einer entsprechenden Anforderung 151 IP-Adressen der Software-Container 111, 121 bzw. der die Software-Container 111, 121 umfassenden Pods sowie Identifikatoren 114, 124 der Software-Container 111, 121 bzw. Pods oder der Server-Einrichtungen 101-102 ab, auf denen die Software-Container 111, 121 ausgeführt werden. Außerdem ordnet die Konfigurationssteuerungseinrichtung 105 diese von der Überwachungseinrichtung 103 abgefragten Informationen 152 den jeweiligen Steuerungsanwendungen zu, beispielweise tabellarisch. Im vorliegenden Ausführungsbeispiel erfasst die Überwachungseinrichtung 103 das Anlegen, das Löschen bzw. die Änderung der Ablaufsteuerungskomponenten insbesondere auf obige Anforderung 151 der Konfigurationssteuerungseinrichtung 105 und registriert die Steuerungsanwendungen mit ihrem jeweiligen Ausführungsstatus dementsprechend.

Die Identifikatoren 114, 124 der Software-Container 111, 121 bzw. Pods oder der Server-Einrichtungen 101-102, auf denen die Ablaufsteuerungskomponenten ausgeführt werden, können beispielsweise durch die Überwachungseinrichtung 103 verwaltete Bezeichner für die Software-Container 111, 121 bzw. Pods oder Stations- oder Funktionsnamen der Server-Einrichtungen 101-102 sein. Insbesondere können die Identifikatoren 114, 124 Kubernetes-Label für Dienste, Software-Container, Pods oder Daemon Sets sein.

Aus den abgefragten IP-Adressen und Identifikatoren 114, 124 sowie aus Bezeichnungen der zugeordneten Steuerungsanwendungen erzeugt die Konfigurationssteuerungseinrichtung 105 Konfigurationsinformationen 153 für den Reverse-Proxy 104. Der Reverse-Proxy 104 leitet die Anfragen 211 des zumindest einen Endgeräts 201 entsprechend den Konfigurationsinformationen 153 an den jeweiligen Software-Container 111, 121 bzw. Pod weiter.

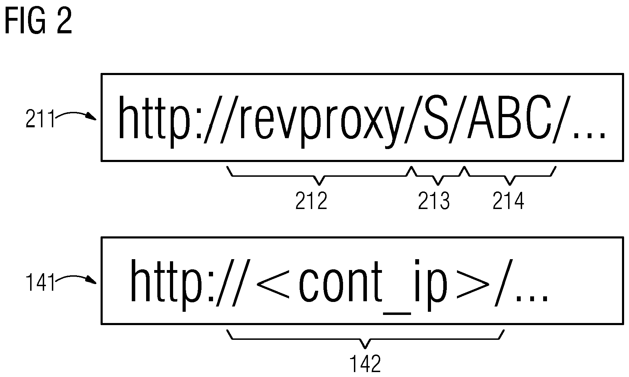

Entsprechend Figur 2 umfassen durch den Reverse-Proxy 104 entgegengenommene HTTP-Anfragen 211 jeweils neben einem DNS-Namen 212 des Reverse-Proxy 104 bzw. des Rechner-Clusters 100 zumindest eine Bezeichnung 213 einer ausgewählten Steuerungsanwendung und einen Identifikator 214 eines ausgewählten Software-Containers bzw. Pods oder einer ausgewählten Server-Einrichtung. Im vorliegenden Ausführungsbeispiel ersetzt der Reverse-Proxy 104 von den HTTP-Anfragen 211 des zumindest einen Endgeräts jeweils umfasste Referenzen 212-214 auf angeforderte Dienste entsprechend den Konfigurationsinformationen 153 durch geänderte Referenzen 142 auf die angeforderten Dienste und leitet entsprechend modifizierte HTTP-Anfragen 141 mit den geänderten Referenzen an den jeweiligen Software-Container 111, 121 bzw. Pod weiter. Bei dem in Figur 2 dargestellten Beispiel verkürzt der Reverse-Proxy 104 einen Uniform Resource Locator aus der entgegengenommenen HTTP-Anfrage 211 um den DNS-Namen 212, die Bezeichnung 213 der ausgewählten Steuerungsanwendung und den Identifikator 214 und ersetzt diese Angaben in der modifizierten HTTP-Anfrage 141 durch die IP-Adresse 142 des jeweiligen Software-Containers 111, 121 bzw. Pods.

Im vorliegenden Ausführungsbeispiel die Konfigurationsinformationen 153 Routen vom Reverse-Proxy 104 zum jeweiligen Software-Container 111, 121 bzw. Pod. Diese Routen können beispielsweise folgendermaßen definiert sein:
*routes:*
- *prefix-strip:* /*S*/*ABC*
   *server-url: http:*//*1.2.3.4*/
- *prefix-strip:* /*S*/*123*
   *server-url: http:*//*9.8.7.6*/
- *prefix-strip:* /*T*/*foo*
   *server-url: http:*//*6.6.6.6*/

Dabei sind S und T Bezeichnungen 213 von Steuerungsanwendungen. ABC, 123 und foo sind Identifikatoren 214 von Software-Containern, Pods oder Server-Einrichtungen. 1.2.3.4, 9.8.7.6 und 6.6.6.6 sind IP-Adressen 142 von Software-Containern bzw. Pods. Vorzugsweise werden nur Routen für existierende Software-Containern bzw. Pods erstellt und gepflegt. Auf diese Weise kann sichergestellt werden, dass Endgeräte ihre HTTP-Anfragen nicht wahllos an andere Software-Container bzw. Pods senden können. Damit wird vermieden, dass sich Endgeräte über einen zunächst adressierten Dienst versteckt einen anderen Dienst nutzen können.

## Patentansprüche

1. Verfahren zur Bereitstellung von Steuerungsanwendungen, bei dem
- die Steuerungsanwendungen durch Server-Einrichtungen (101-102) zur Nutzung an Endgeräten (201) über ein Kommunikationsnetz (200) für eine Übermittlung zeitkritischer Daten bereitgestellt werden,
- die Steuerungsanwendungen jeweils mittels Ablaufsteuerungskomponenten (111, 121) bereitgestellt werden, die in mittels der Server-Einrichtungen (101-102) gebildete Ablaufsteuerungsumgebungen (112, 122) ladbar und dort ausführbar sind, wobei die Ablaufsteuerungskomponenten auf jeweils andere Server-Einrichtungen zur dortigen Ausführung migrierbar und/oder auf jeweils anderen Server-Einrichtungen zeitgleich ausführbar sind,
- eine mehreren Server-Einrichtungen (101-102) zugeordnete Überwachungseinrichtung (103) ein Anlegen, ein Löschen und/oder eine Änderung der Ablaufsteuerungskomponenten (111, 121) erfasst und die Steuerungsanwendungen mit ihrem jeweiligen Ausführungsstatus registriert,
- eine Konfigurationssteuerungseinrichtung (105) von der Überwachungseinrichtung (103) Kommunikationsnetzadressen der Ablaufsteuerungskomponenten (111, 121) sowie Identifikatoren (111, 124) der Ablaufsteuerungskomponenten oder der Server-Einrichtungen (101-102), auf denen die Ablaufsteuerungskomponenten ausgeführt werden, abfragt und diese Informationen den Steuerungsanwendungen zuordnet,
- die Konfigurationssteuerungseinrichtung (105) aus den abgefragten Kommunikationsnetzadressen und Identifikatoren sowie aus Bezeichnungen der zugeordneten Steuerungsanwendungen Konfigurationsinformationen (153) für eine Weiterleitungseinrichtung (104) erzeugt,
- die Weiterleitungseinrichtung (104) Anfragen (211) der Endgeräte (201) zur Nutzung der Steuerungsanwendungen entgegennimmt und entsprechend den Konfigurationsinformationen (153) an eine jeweilige Ablaufsteuerungskomponente (111, 121) weiterleitet, wobei die Anfragen jeweils zumindest eine Bezeichnung einer ausgewählten Steuerungsanwendung und einen Identifikator einer ausgewählten Ablaufsteuerungskomponente oder Server-Einrichtung umfassen.

2. Verfahren nach Anspruch 1,
bei dem die Weiterleitungseinrichtung ein Reverse-Proxy ist und von den Anfragen der Endgeräte jeweils umfasste Referenzen auf angeforderte Dienste entsprechend den Konfigurationsinformationen durch geänderte Referenzen auf die angeforderten Dienste ersetzt.

3. Verfahren nach Anspruch 2,
bei dem die Weiterleitungseinrichtung die Anfragen der Endgeräte jeweils entsprechend den geänderten Referenzen an die jeweilige Ablaufsteuerungskomponente weiterleitet.

4. Verfahren nach einem der Ansprüche 2 oder 3,
bei dem die Konfigurationsinformationen Routen von der Weiterleitungseinrichtung zur jeweiligen Ablaufsteuerungskomponente umfassen und bei dem die Referenzen auf die angeforderten Dienste Uniform Resource Locators sind.

5. Verfahren nach Anspruch 4,
bei dem nur Routen zu den Ablaufsteuerungskomponenten eingerichtet werden, die nutzbaren und/oder freigegebenen Diensten zugeordnet sind.

6. Verfahren nach einem der Ansprüche 1 bis 5,
bei dem das Anlegen, das Löschen und/oder die Änderung der Ablaufsteuerungskomponenten jeweils ein Allokieren oder Freigeben von Ressourcen in der jeweiligen Server-Einrichtung umfasst.

7. Verfahren nach einem der Ansprüche 1 bis 6,
bei dem die Überwachungseinrichtung (103) auf Anforderung (151) durch die die Konfigurationssteuerungseinrichtung (105) das Anlegen, das Löschen und/oder die Änderung der Ablaufsteuerungskomponenten erfasst und die Steuerungsanwendungen mit ihrem jeweiligen Ausführungsstatus registriert.

8. Verfahren nach einem der Ansprüche 1 bis 7,
bei dem die Ablaufsteuerungskomponenten Software-Container sind, die jeweils innerhalb einer von anderen Software-Containern isolierten Ablaufsteuerungsumgebung auf einem Host-Betriebssystem der jeweiligen Server-Einrichtung ablaufen.

9. Verfahren nach Anspruch 8,
bei dem die Software-Container jeweils gemeinsam mit anderen auf der jeweiligen Server-Einrichtung ablaufenden Software-Containern einen Kernel des Host-Betriebssystems der jeweiligen Server-Einrichtung nutzen.

10. Verfahren nach einem der Ansprüche 8 oder 9,
bei dem Speicherabbilder für die Software-Container aus einem durch eine Vielzahl von Nutzern lesend und/oder schreibend zugreifbaren Speicher- und Bereitstellungssystem abrufbar sind.

11. Verfahren nach einem der Ansprüche 1 bis 10,
bei dem mittels der Steuerungsanwendungen Dienste und/oder Funktionen eines industriellen Automatisierungssystems bereitgestellt werden.

12. Verfahren nach Anspruch 11,
bei dem die Dienste jeweils mehrere gleichartige oder identische Steuerungsanwendungen umfassen, die jeweils durch unterschiedliche Server-Einrichtungen bereitgestellt werden.

13. Verfahren nach einem der Ansprüche 1 bis 12,
bei dem die Identifikatoren (114, 124) der Ablaufsteuerungskomponenten (111, 121) oder der Server-Einrichtungen (101-102), auf denen die Ablaufsteuerungskomponenten ausgeführt werden, durch die Überwachungseinrichtung (103) verwaltete Bezeichner für die Ablaufsteuerungskomponenten oder Stations- oder Funktionsnamen der Server-Einrichtungen sind.

14. Konfigurationssteuerungseinrichtung zur Durchführung eines Verfahrens entsprechend einem der Ansprüche 1 bis 13, wobei die Konfigurationssteuerungseinrichtung dazu ausgestaltet und eingerichtet ist
- Kommunikationsnetzadressen von Ablaufsteuerungskomponenten (111, 121), die Steuerungsanwendungen bereitstellen und in mittels Server-Einrichtungen (101-102) gebildete Ablaufsteuerungsumgebungen (112, 122) ladbar und dort ausführbar sind, sowie Identifikatoren (114, 124) der Ablaufsteuerungskomponenten oder der Server-Einrichtungen, auf denen die Ablaufsteuerungskomponenten ausgeführt werden, von einer den Server-Einrichtungen zugeordneten Überwachungseinrichtung (103) abzufragen und diese Informationen den Steuerungsanwendungen zuzuordnen,
- aus den abgefragten Kommunikationsnetzadressen und Identifikatoren sowie aus Bezeichnungen der zugeordneten Steuerungsanwendungen Konfigurationsinformationen (153) für eine Weiterleitungseinrichtung (104) zu erzeugen und an die Weiterleitungseinrichtung bereitzustellen, wobei die Weiterleitungseinrichtung Anfragen (211) von Endgeräten (201) zur Nutzung der Steuerungsanwendungen entgegennimmt und entsprechend den Konfigurationsinformationen an eine jeweilige Ablaufsteuerungskomponente weiterleitet.
